Europäisches Patentamt

(19) European Patent Office

Office européen des brevets

(11) Publication number: **0 037 668**

**B1**

(12) # EUROPEAN PATENT SPECIFICATION

(45) Date of publication of patent specification: 04.06.86

(51) Int. Cl.⁴: **G 01 H 9/00**

(21) Application number: **81301216.8**

(22) Date of filing: **23.03.81**

(54) Optical transducer means.

(30) Priority: **24.03.80 US 133171**

(43) Date of publication of application:
**14.10.81 Bulletin 81/41**

(45) Publication of the grant of the patent:
**04.06.86 Bulletin 86/23**

(84) Designated Contracting States:
**DE FR GB IT**

(56) References cited:
**EP-A-0 005 798**
**FR-A-2 427 584**

**EASCON'79 RECORD, vol. 3, September 25-27,
1978, in Arlington, VA, IEEE Publication 79 CH
1476-i AES BUCARO et al. "Acoustic-optic
sensor development", pages 572-580**

**APPLIED OPTICS, vol. 13, no. 1, January 1974,
New York, US COHEN et al "Microlenses for
coupling junction lasers to optical fibers",
pages 89-94**

**OPTICS LETTERS, vol. 5, no. 1, January 1980,
New York, US SPILLMANN et al. "Moving
fiberoptic hydrophone", pages 30, 31**

(73) Proprietor: **SPERRY CORPORATION
1290, Avenue of the Americas
New York, N.Y. 10019 (US)**

(72) Inventor: **McMahon, Donald Howland
Judy Farm Road
Carlisle Massachusetts 01741 (US)**

(74) Representative: **Singleton, Jeffrey
ERIC POTTER & CLARKSON 27 South Street
Reading Berkshire, RG1 4QU (GB)**

Courier Press, Leamington Spa, England.

## Description

This invention relates to optical transducer means and, more particularly, to transducer means adapted to convert small displacements into variations of light intensity and thence into corresponding electrical current variations.

Prior art optical transducers, especially of the kind found useful in the past for converting the small deflections associated with sound signals present in a liquid medium into electrical signals, are generally discussed in European Patent Application No. 80.302655.8 published as EP—A1-24831 on 11.3.81 and claiming a priority of 04.09.79., the inventor of which is R. L. Gravel.

The Gravel fibre optic transducer includes two optical fibres each cut to have end faces substantially perpendicular to an axis and positioned with a small gap between the end faces of the fibres. One fibre is mounted to maintain its end face stationary, for example, while the other is cantilevered to permit displacement of its end face. When the fibre axes lie on a common straight line, light propagating in one fibre will be coupled with maximum intensity into the other fibre.

An acousto-optic transducer may be constructed in accordance with the Gravel invention by extending an optical fibre between two mounting structures disposed upon a base plate, mounting the fibre under tension to orient the axis along a straight line, bonding the fibre to both mounting structures to maintain the axis orientation thereafter, and cutting the fibre near the end of one mounting structure to obtain two fibres, one mounted to maintain its end face stationary and the other cantilevered to permit transverse displacement of its end face.

It will be clear to those skilled in the art that the displacement sensitivity of the Gravel transducer is governed by the diameter of the core of the optical wave guide. For example, if the free end of the long fibre is caused to vibrate, the light transmitted into and through the associated fixed short fibre varies from one hundred per cent when the fibre axes are accurately aligned to zero when one fibre guide is displaced transversely by a distance equal to the core diameter. To obtain maximum pressure sensitivity, the axes of the cooperating fibres may be offset to approximately the fifty per cent transmission condition at the prevailing static pressure value.

The Gravel device, when used with a conventional photo-detector-amplifier circuit in a sonar detector, desirably has a sensitivity at least equal to the sea noise ambient and insensitivity to pressure head variation. That is, the Gravel technique is not limited in sensitivity by the phase noise problem that conventionally plagues the interfero-metric single-mode sensing technique, but is limited only by the fundamentally irreducible electron shot noise characteristics of the photo-detector. Many other optical intensity modulation schemes are undesirably sensitive to pressure head changes.

While the prior art fibre optic approach is preferably selected in certain applications wherein displacement transducers are required, single mode fibre guides are necessary to achieve reasonable sensitivity. Also, the adjustment of the positions of the cooperating fibre ends is relatively critical in three dimensions. Means must be provided for making these adjustments, each of which calls for a tolerance of about one micron; while they may be relatively simple mechanically, there must be precise adjustments in three dimensions for each fibre, invariably adding to the cost of the transducer.

Another form of optical transducer is shown in European Patent Specification No. 0,005,798 wherein a single optical fibre is attached by an index matched material to an optical plate carrying a grating and movable relative to a further optical plate also carrying a grating and having a reflective backing. Light is transmitted from the fibre, through the two gratings and is reflected back along the same path into the fibre, the light being modulated according to the relative dispositions of the two gratings.

Yet another form of optical transducer is disclosed in the IEEE Publication 79CH 1476-1 AES entitled "EASCON' 79 RECORD". On page 576 of this publication there is shown in Figure 7 a moving grating sensor in which two co-axial optical fibres are held stationary with their facing ends spaced apart. In the gap between the facing ends of the optical fibres there are disposed two gratings one of which is movable and the other of which is held stationary, the movable grating being coupled to a diaphragm which is responsive to pressure variation to be sensed by the transducer.

The present invention is as set out in claim 1.

In one embodiment the present invention provides an improved fibre optical wave guide transducer for measuring small pressure changes or displacements as in hydrophone devices or the like, and for converting them into optical variations and then into electrical signals. A first optical fibre guide is disposed with its end face stationary, for example, while a second optical fibre guide is disposed so that its free end may be laterally displaced from the axis of the first guide in proportion to variations in pressure or forces applied to the free end of the second guide. Under the influence of continuous pressure variations present within an acoustic medium in which the hydrophone is submerged, for example, the optical energy passing through the fibre wave guides is amplitude or phase modulated in a manner representative of the amplitude of the imposed pressure variations.

The operating sensitivity and other characteristics can be improved through the use of large core, large numerical aperture, multimode optical fibres. The opposed faces of cooperating fibres may cooperate with regular arrays of equally spaced opaque, absorptive, or reflective grating lines. The gratings may cause intensity or phase modulation of the propagating light energy in proportion to the wave guide deflection and may consist of stripes or arrays or of other regular patterns having spacings substantially smaller than the diameters of the optical fibres. In some of the embodiments moderately critical location tolerance must now be met in only one dimension. Matrices of grating lines may be placed on relatively large, relatively movable plates, while the fibre wave guides include collimating lenses and remain stationary. Hybrid structures may be realised.

The invention will now be described, by way of example, with reference to the accompanying drawings, in which:—

Figure 1 is an elevation, partially in cross-section, of one embodiment of transducer means according to the invention,

Figure 2 is a fragmentary view in cross-section of a portion of Figure 1, illustrating a detail thereof on an enlarged scale,

Figure 3 is a diagrammatic representation useful in explaining the operation of the transducer means,

Figures 4, 5, and 6 are generally similar to Figure 2, but show variations of the structure of Figure 2,

Figures 7 and 7A illustrate further variations of the structures shown in Figures 2 and 5, but do not form part of the invention,

Figure 8 is an elevation, partially in cross-section, of a variation of part of the transducer means of Figure 1,

Figure 9 is a simplified elevation view of an alternative of the transducer means of Figure 1,

Figure 10 is a face view of ends of fibre optic wave guides of Figure 9 showing the disposition of cooperating stripe arrays,

Figure 11 represents a plan view of a reflection variant of the transducer means of Figures 1 and 9, but does not form part of the invention,

Figure 12 is an elevation, partially in cross-section of part of Figure 11 but does not form part of the invention,

Figure 12A is a view similar to the right-hand end portion of Figure 12, but illustrating an alternative embodiment wherein optical fibres are held stationary while the gratings may be moved with respect thereto but does not form part of the invention,

Figure 13 is a fragmentary view of an alternative of Figures 11 and 12 but does not form part of the invention,

Figure 14 is a plan view of a variant of the embodiment of Figure 11 but does not form part of the invention,

Figure 15 is a wiring diagram of a data processing system for use with the transducer means of Figure 14 but does not form part of the invention,

Figure 16 is a fragmentary view of a form of the transducer means using two colours of light but does not form part of the invention, and

Figure 17 is a view of optical elements cooperating with the apparatus of Figure 16 but does not form part of the invention.

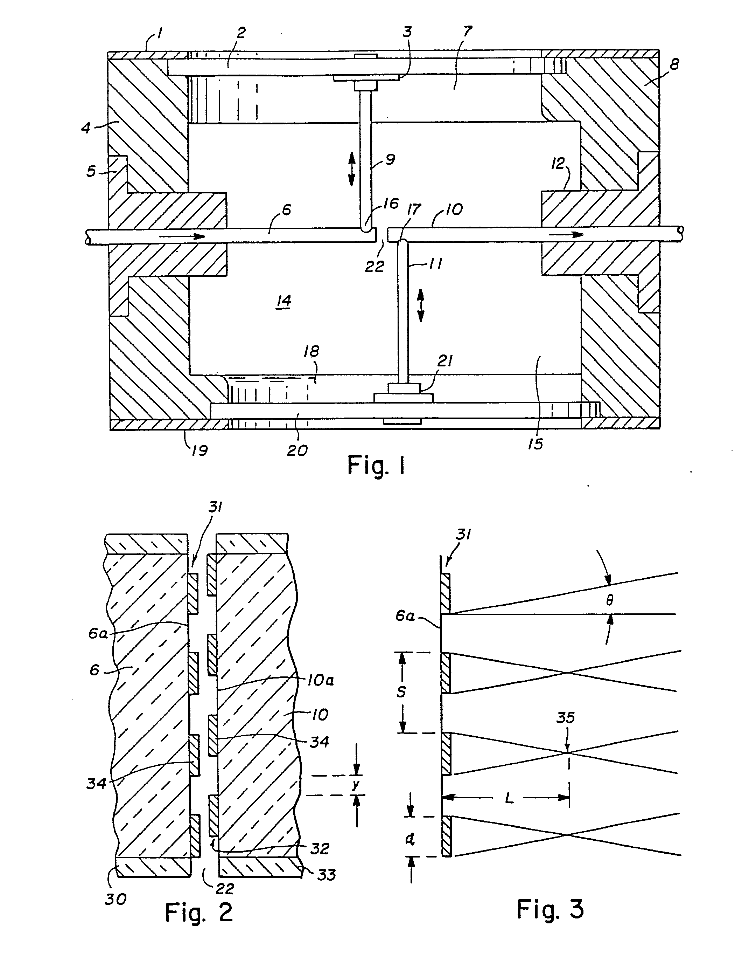

A first embodiment of the invention will be discussed with respect to Figures 1, 2, and 3 which show mounting means which may take the form of a closed casing including flat opposed end walls 4 and 8 and a pair of similar flat opposed side walls of which only wall 15 is seen in Figure 1. Closure of the internal cavity 14 is completed by opposed parallel flexible circular pressure-responsive diaphragms 2 and 20 disposed in respective extensions 7 and 18 of end walls 4, 8 and affixed therein by the respective generally ring-shaped clamps 1 and 19. The clamps 1, 19 may be bonded to extensions 7, 18 by a suitable adhesive material or by conventional threaded fasteners (not shown) for holding the peripheries of diaphragms 2, 20.

Centrally in the end wall 4 is disposed a metal ferrule 5 and an optical fibre guide 6 extending therethrough and normally ending near the centre of cavity 14, which cavity contains an inert damping fluid. The centre of the diaphragm 2 is attached by a fastener 3 to a stiff translatable rod 9 fastened at a juncture 16 by a suitable adhesive to a point adjacent the inner end of the optical fibre guide 6. The fibre guide 6 may have a round cross-section or, since it is normally intended to move radially in the plane of Figure 1, may be square or rectangular in cross section. The guide 6 normally operates as the optical fibre light input to the transducer means.

In a similar manner, a fibre guide 10 serving as a light output is mounted within a ferrule 12 opposite the ferrule 5, the guide 10 extending inwardly of the cavity 14 and normally ending near the middle of that cavity. In their quiescent, state, the optical fibre guides 6, 10 are aligned along a common axis with a short gap 22 formed between their inner ends. The centre of the diaphragm 20 is attached by a fastener 21 to a stiff translatable rod 11 fastened at a juncture 17 by adhesive to a point adjacent the inner end of the optical fibre 10. The relative deviation of the respective ends of the fibre guides 6, 10 depends upon the relative inward or outward motion of the respective diaphragms 2, 20 and the consequent relative radial motions of the linking rods 9, 11. If the transducer device were used, for example, as a hydrophone just beneath the surface of a body of water, an impulse compression wave having a component propagating upwardly in Figure 1 would ideally first actuate the diaphragm 20 and the link rod 11 to move the fibre guide 10 first up, then down. Having a wave length normally large in compression with any dimension of the apparatus, the compression wave would almost simultaneously actuate the diaphragm 2 and the link rod 9 to move the fibre guide 6 first down, then up. Further damped motions of the ends of each fibre guide 6, 10 may be caused depending upon the parameters of the system, as will be appreciated by those skilled in the art. Small motions are assumed.

It is intended that the normally steady flow of light through the input fibre guide 6, the gap 22, and the output fibre guide 10 will be modulated according to the relative displacement of the ends of the fibre optic light guides 6, 10 at the gap 22 so as to convey output information via the guide 10 for evaluation by available data processing means or for recording or for visual display in a conventional manner, for example. A novel optical displacement pick-off device may be employed within the gap 22 for generating the desired amplitude modulated output light signal and one form of this pick-off device is illustrated in Figure 2. It will be understood that the pick-off device is versatile and may be used to measure any of various parameters that may readily be converted into small displacements of a movable element with respect to a fixed index or, as in the apparatus of Figure 1, small relative motions between two movable elements.

Referring to Figures 2 and 3, the facing ends 6a, 10a of the fibre guides 6, 10 and claddings 30, 33 at the gap 22 may be constructed by the general method disclosed in the aforementioned European Patent Application No. 80.302655.8. Other methods of construction will be apparent to those skilled in the fibre optical guide art. It is arranged that the ends 6a, 10a of the optical fibres at the gap 22 are optically polished to make the facing ends 6a, 10a substantially perpendicular to the common quiescent axis of the fibre guides 6, 10. The fibre guides 6, 10 are constituted by large core, large numerical aperture, multimode fibres. The preferred fibres are graded refractive index fibres wherein the optical index of refraction decreases as a function of the radial distance from the centre of the fibre guide so as to avoid the adverse effects of pulse dispersion. Such multimode fibre guides are used because they are compatible with the geometry of available light emitting diodes that are preferred light sources for use in propagating substantially monochromatic light into the input fibre guide 6. Additionally, connectors for use with multimode fibre guides are readily available commercially, while connectors for single mode guides are not widely available and will probably remain excessively expensive. Furthermore, the larger faces of the fibre core ends 6a, 10a more readily accommodate the optical pick-off device, permitting a preferred scale factor to be employed.

The pick-off system of Figures 2, 3 employs a technique wherein the positional sensitivity of the system is dependent only on the parameters of the pick-off system and is desirably independent of the fibre guide core diameter. In Figure 2, the opposed fibre ends 6a, 10a are provided with regular arrays 31, 32 of alternating transparent and opaque or absorbing stripes of substantially equal width. The opaque array elements, such as stripe 34, are formed of an opaque material such as a metal deposited through a mask. Other conventional methods, including photolithographic methods, may be employed. The stripes 34 deposited on each fibre end are mutually parallel, but the arrays are displaced (vertically in Figure 2) by a distance equal to a quarter of the line-to-line spacing S (Figure 3) of the stripes. While only four stripes are illustrated in Figure 2 for each array 31, 32, it will be understood that many more stripes are used in practice.

If the fibre guide 6 in Figure 2 is moved upwards by the small distance S/4, the opaque portions of the arrays 31 and 32 and the individual stripes 34 within them precisely overlap. Accordingly, half of the light propagating in the input fibre guide 6 passes through the gap 22 to be transmitted into or through the fibre guide 10. On the other hand, if the end 10a of the output fibre guide 10 is moved upwards by a distance S/4, the opaque stripe arrays are precisely interleaved so that substantially no light from the input fibre guide 6 reaches the output fibre guide 10.

From the geometry of Figure 2, it will be clear that, ignoring diffraction effects, the pick-off device is characterised by a minimum loss of 3 dB. For a relatively fine array with a small value of S, light diffraction induces an addition loss by converting light entering the output fibre guide 10 into radiated modes. For preferred arrangements, the radiative losses may be neglected, so that a transverse relative displacement of S/2 causes the maximum change in output signal. By way of example, if S/2 is one micron, the positional sensitivity is 2.5 times as great as that achieved by the smallest available core, single-mode fibre of the aforementioned Gravel apparatus.

It will now be clear that the sensitivity of the pick-off device is completely independent of core diameter. It will also be apparent that the transverse positioning tolerances of the fibre guide are relaxed, facilitating ease of manufacture. Simple arguments indicate that widths of the deposited stripes 34 as small as about two microns may usefully and reasonably be achieved. Assuming stripe widths large compared with the wave length of light and therefore that diffraction effects are small, Figure 3 depicts the spreading of light from the fibre guide 6 after passing through its associated array 31. The half spreading angle $\theta$ in radians is then for all practical purposes equal to the numerical aperture of the fibre guide 6. For an array 31 of opaque and clear or transparent stripes of width S/2, the umbra length L is $S/4\theta$. If $\theta$ is 0.2 and S/2 is one micron, then L is 2.5 microns. Hence, the spacing between the fibre ends 6a, 10a must be well under 2.5 microns in order to approach the full modulation capability. To achieve such a close spacing, the ends of a 200 micron fibre guide must be polished perpendicular to the fibre axis with an accuracy better than one degree and polished flat to an accuracy better than one half a wave length of the operating light. For values of S large compared with one micron, device tolerances scale directly with the magnitude of the factor S. For values of S comparable to or smaller than the wave length of light, device tolerances scale quadratically with the magnitude of S, so that devices having S values less than two microns will be difficult to realise.

Diffraction limitations also depend upon the factor S. In terms of diffraction theory, the line spacing S creates multiple diffraction orders spaced in angle by $\lambda/S$. When S is two microns and $\lambda$ is 0.8 microns, the diffraction spreading angle is 0.4 radians; i.e., about twice that of the numerical aperture spreading. It is therefore again apparent that devices having stripe spacings less than two microns are relatively difficult to implement. It is seen that both geometric and diffraction aspects of the pick-off device limit S values to be greater than about two microns.

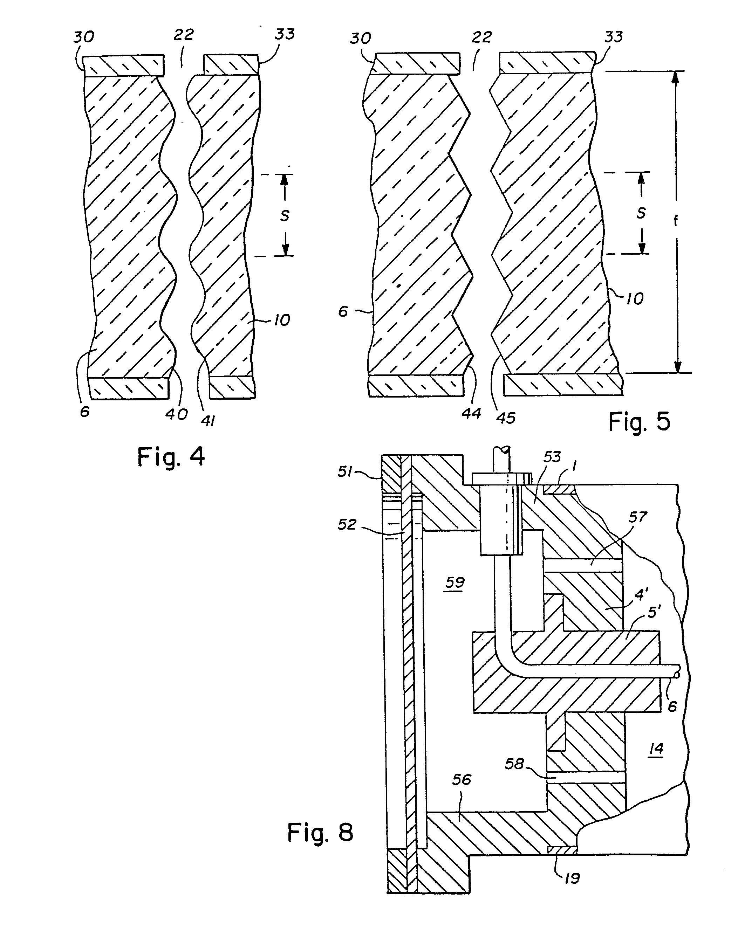

A further embodiment of the invention allows one to overcome the inherent limitations of the Figure 2 device which cause half the input light to be wasted by absorption and which may cause another significant fraction of the input light to be diffracted into radiating modes and thus be lost. In this embodiment, which is shown in Figure 4, the amplitude modulating arrays 31, 32 of the absorbing stripes 34 are replaced by what is defined herein as phase grating arrays 40, 41. The phase gratings may be deposited by conventional means on the opposed end faces of the guides 6, 10 or, as suggested by observation of Figure 4, may be formed by an appropriately shaped scribe moved by a conventional ruling engine across the fibre end faces. Other methods will be apparent to those skilled in the art. In Figure 4, the phase gratings each form a regular sinusoidal or corrugated surface, the corrugations of the array 40 of the fibre guide 6 being displaced vertically in the figure by S/4 with respect to the corrugations of the array 41 of the fibre guide 10.

Assume in Figure 4 that the light propagating through the thickest part of either phase grating suffers a phase retardation of 90° relative to light that traverses the thinnest portions. Furthermore, assume for simplicity that the fibre corrugated ends are themselves very closely spaced so that changes in light direction caused by refraction or diffraction can be ignored. If the corrugated end of the fibre guide 6 is moved downwards in the figure by S/4, the combined retardation of both phase gratings cancels so that there can be no net refraction or diffraction of light to alter the direction of light as it passes from the fibre guide 6 into the fibre guide 10. In this case, substantially all light carried by the fibre guide 6 will enter and travel into the fibre guide 10. If the corrugated end of the fibre guide 10 is moved upwards in the figure by S/4, a total relative phase retardation of 180° will result between the thickest and thinnest portions of the phase gratings. The net result is that substantially all light is diffracted out of the zero diffraction order into the ±1 and higher diffraction order. With S equal to two microns, the diffraction angle of 0.4 radians takes all light out of the low loss fibre guide modes and places it in the high loss, radiating modes. Hence, for this second case, substantially no light can pass from the fibre guide 6 into the fibre guide 10. It will be apparent that other configurations approximating to the corrugated surfaces of Figure 4 may be used to achieve substantially the same results. For example, surfaces such as the arrays 44 and 45 in Figure 5 made up of a regular succession of long transparent roof prisms may be employed, the roof apieces of the array 44 being displaced by S/4 with respect to the roof apieces of the array 45.

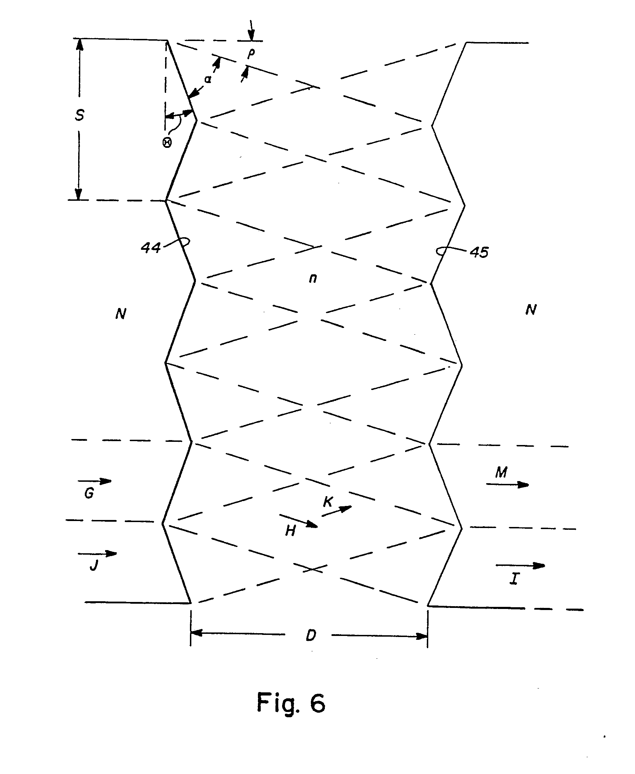

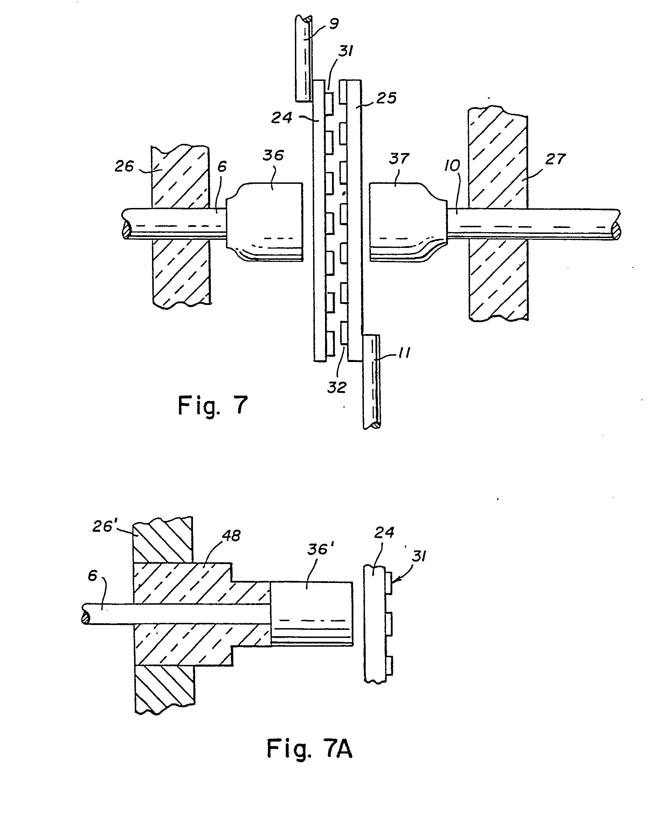

It will be instructive to examine Figure 6 in order to obtain a more complete understanding of devices such as those of Figures 4 and 5; it should be observed that this understanding will be useful with respect to applications of amplitude and phase gratings in configurations yet to be discussed in connection with Figures 7, 7A. In Figure 6, light normally incident from the left on the corrugated face of the phase grating array 44 will be refracted up or down through an angle ρ depending upon the slope of the grating facet upon which it is incident. For example, a light bundle G will be refracted down as at H and will form bundle I upon traversing the corrugated face of the grating array 45. On the other hand, a light bundle J will be refracted upwardly as at K to form bundle M upon passing through the corrugated face of the grating array 45. The bundles G and J have, in effect, changed places. If the slope of each facet is θ with respect to normal incidence, if N is the index of refraction of the material of the grating arrays 44, 45, and if $n$ is the relatively lower index of refraction of the medium between the grating arrays 44, 45, then the angle ρ is determined by:

$$N \sin \theta = n \sin (\rho + \theta) \qquad (1)$$

In order to obtain one hundred per cent modulation of the light as one grating is moved up or down relative to the other, the separation D between the grating arrays 44, 45 must be an integral multiple of the distance S defined by:

$$D = S \ \rho/2 \qquad (2)$$

for small values of θ. For light with a numerical aperture cone of λ0.01 radians, the distance D can approach a value one hundred times greater than S (neglecting minor diffraction effects). For example, if S<0.001 cm., D could be 0.01 cm. and 90 per cent modulation would readily be attained as one grating is displaced relative to the other. It is seen that the important feature of the phase grating concept of Figure 5 lies in the fact that the maximum theoretical lightflow through the sensor is one hundred per cent as opposed to a maximum light flow only half as great for the absorption type of grating of Figure 2. The lower optical loss improves the sensor sensitivity by 3 dB. Although theoretically more complex, the sinusoidal phase grating arrays of Figure 4 and other such devices likewise have fixed grating separations that yield optimum sensitivity with intermediate separations having zero sensitivity.

A further embodiment of the invention appears in Figure 7; here, the fibre optical input and output guides 6 and 10 are rigid elements affixed in spaced opposition within respective walls 26, 27 which may be similar to the walls 4, 8 of Figure 1. Parallel transparent thin plates 24, 25 are disposed within the instrument, and are independently movable in a vertical sense, for example, being supported also by vertically movable rods 9, 11. The plates 24, 25 may constrained to move in parallel vertical paths by the use of any well known parallel motion mechanism (not shown).

Decollimating lenses 36 and collimating lenses 37 are affixed to the adjacent ends of the optical fibre guides 6 and 10 and are beneficial for use in the preferred forms of the invention wherein the grating arrays are affixed to parallel movable plates 24, 25. Such collimating and decollimating lenses, particularly designed for use with optical fibre light guides, are widely described in technical literature, including U.S. Patent Application Serial No. 13,095, filed February 21, 1979, and U.S. Patent No. 3,894,789 to Kobayashi et al. The selected lens preferably has three features for use in the present embodiment: the lens length is a fourth of the wave guide pitch so as to image the fibre core source at infinity, the lens numerical aperture is greater than the core numerical aperture, and the lens outside diameter exceeds the fibre cladding diameter. Also of interest are the arrangements of the Holzman U.S. Patent No. 4,119,362 and of the paper "Microlenses for Coupling Junction Lasers to Optical Fibres", *Applied Optics*, January 1974, page 89, by L. G. Cohen et al. Other conventional devices may be employed. Suitable devices may be purchased under the trade-name Selfoc from the Nippon Sheet Glass Company, 3, New England Executive Park, Burlington, Massachusetts, U.S.A. In the modification of Figure 7A, the collimating lens 36' is supported at least in part by a ferrule 48 extending through a wall 26' generally similar to the wall 26 of Figure 7, the input fibre guide 6 extending through the ferrule 48. A similar ferrule arrangement and lens (identified herein as 37' but not shown in the drawings) would be used in association with the output fibre guide 10. One or both grating arrays 31, 32 may be movable.

The use of lenses such as lenses 36, 37, 36', 37' is of particular benefit in the embodiments of Figures 7 and 7A. The lens 36 reduces the numerical aperture in one example from $\pm0.2$ radians for a $10^{-2}$ centimetre diameter fibre guide to about $\pm0.10$ radians. This reduction in the angular spread of light emitted by the guide 6 conveniently allows a spacing as large as several centimetres between the adjacent ends of the graded index lenses 36, 37 without introducing a significant additional light loss, thereby providing improved sensitivity for the device. The large spacing is particularly beneficial because it allows the opposed grating arrays 31, 32 to be fabricated separately on the respective plates 24, 25 and assembled into the casing entirely apart from the fabrication of the fibre optical system itself. The spacing D between the opposed grating arrays 31, 32 in the device of Figure 7 is no longer limited by the nature of the fibre numerical aperture to very small values. Large separations D are desirable both for coarse absorption gratings and for all phase gratings of the general types shown in Figures 4 and 5.

In this manner, optical fibre wave guide grating sensors are provided that detect motions small compared with the fibre core diameter; the grating sensor arrays may be attached to both fibre ends or to only one such end with the second grating fixed to the instrument casing. At least one of the gratings must be acted upon by the sonic or other disturbance to be monitored, such as a sound wave impacting a hydrophone, so as to cause a transverse motion of one grating relative to another whether or not physically coupled to a fibre end. Two fibre ends of two gratings are placed so that the relative small motions of the two grating arrays cause amplitude modulation of the amount of light transmitted from one fibre to the other. The gratings cause intensity or phase modulation of the light beam and may consist of stripe arrays, checkerboard patterns, or of other patterns having spacings substantially smaller than the diameter of the fibres.

Although not sensitive to acceleration, the device of Figure 1, for instance, cannot distinguish between acoustic waves and pressure head applied to the instrument. It is therefore an object of the embodiments now to be discussed to provide a fibre optical hydrophone, for example, that is sensitive to acoustic pressure variations but not to pressure heads applied to the instrument and that is relatively non-responsive to flow noise. Wide ranges of pressure effects such as the effect of tides, ocean waves, and working depth variations may prevent universal use of apparatus like that of Figure 1. Analysis shows that in wide range instruments, there is a conflict between factors yielding sufficient sensitivity to detect weak acoustic signals and the required insensitivity to large but slow pressure head variations. For maximum sensitivity, the greatest possible flexing of the diaphragm 2 of Figure 1 for the least possible change in pressure is desired. On the other hand, to maintain the device operation within its linear range, displacements caused by the pressure head changes must be less than one grating stripe width.

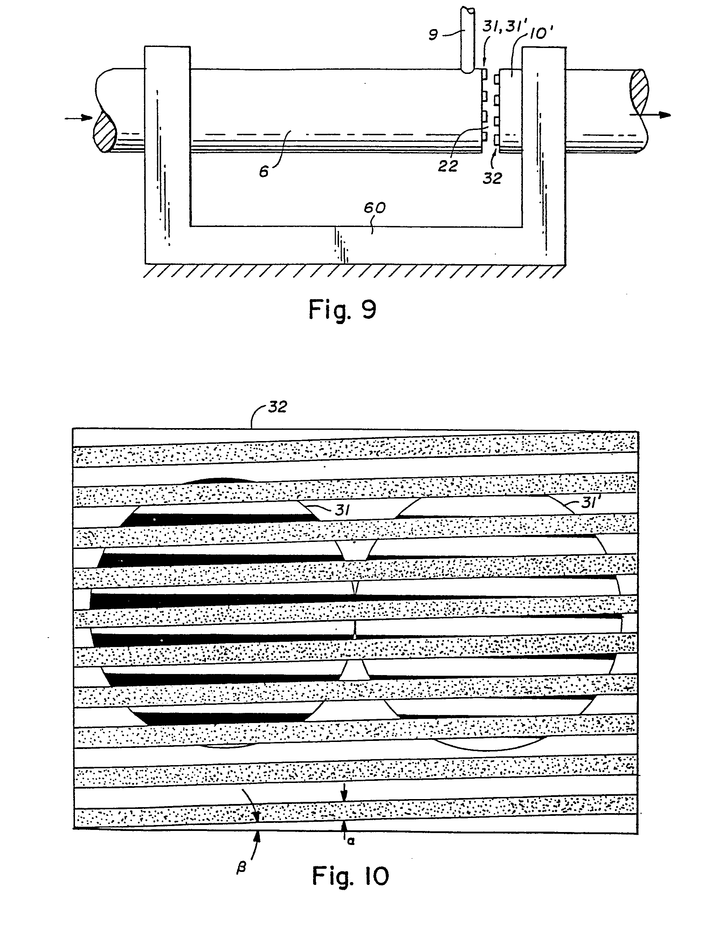

The modification of Figure 1 shown in Figure 8 acts to achieve the desired mechanism for relief of the pressure head variation problem. In Figure 8, the original cavity 14 and its associated parts are the same as those of Figure 1. The centrally located ferrule 5' extending through end wall 4' into a further cavity 59 permits the light guide 6 to leave the cavity 59, the wall 4' being extended by a wall 53 forming part of an enclosure about the further cavity 59. The cavity 59 is completed by a flexible diaphragm 52 exposed to the medium in which the hydrophone is operated and fastened to the wall 53 by a ring-shaped clamp 51. Two or more small bores 57, 58 extend through the wall 4' to connect the cavity 59 to the cavity 14. A suitable damping fluid fills the cavities 14, 59 and bores 57, 58.

The pressure head relief mechanism formed within the cavity 59 has a time constant quite long with respect to the lowest frequency to be detected by the diaphragms 2, 20, making use of the more compliant membrane 52 attached at its periphery by the clamp 51 to the casing wall 53. If the pressure head outside the instrument increases, the unequal pressures on the sides of the diaphragm 52 force fluid from the cavity 59 through the bores 57, 58 into the cavity 14, thereby relieving the pressure head differential on the several diaphragms. The size of the bores 57, 58 and the volumes of the cavities 14 and 49 are so selected as to create a suitable time constant (0.1 to 10 seconds) for relief of the undesired pressure head effect within the cavity 14. While the pressure head mechanism may not always completely null out pressure head changes, it does so to a sufficient degree for many purposes. The use of the closed dual cavities and the inert damping liquid they contain prevents corrosion of the interior of the instrument by the exterior medium.

For greater versatility, a further embodiment of the invention deserves attention; such an embodiment maintains sensitivity even though the linear range of a simple transducer like that of Figure 2 is exceeded. Since sensitivity is measured over large displacements, assembly tolerances are greatly eased. In the Figure 9 device, which is drawn in exaggerated proportions, a mounting clamp 60 holds fixed the grating array 32 at the end of output fibre guide 10′, while it clamps the input fibre guide 6 at a location remote from the link rod 9 and remote from the input grating array 31 near the gap 22. It is readily seen that the amplitude of light traversing the gap 22 into the fixed output fibre guide 10′ may be a function of a $1+\sin$ ($\pi$ y/d), where y is the relative displacement between the patterns of the gratings 31, 32 and $d$ is the width of one opaque stripe or of one transparent stripe of the grating. It will furthermore be readily apparent that the sensor is linear if y<<d. However, the sensor sensitivity is zero if:

$$y/d=\pm i \qquad (3)$$

where $i$ is any integer. In the present embodiment, a second sensor like that of Figure 2 is introduced, but its gratings 31′ are so disposed that their cooperative response is $1+\cos \pi$ y/d, the two fibres being moved in common by the link rod 9. For example, as in Figures 9 and 10, consider that the grating 32 is fixed and that it cooperates with both of the movable gratings 31, 31′. When the sensor channel associated with the grating 31 has a zero light transmission response, the second sensor channel associated with the grating 31′ has a maximum light transmission response. It is seen that the information propagating through the two channels may be subjected to time delay multiplexing and to whatever additional conventional data processing may be required. It is seen that the gratings 31, 31′ may actually be one continuous grating, since the fibres 6, 6′ move together, and that the gratings 31, 31′ are slanted with respect to grating 32 by a small angle $\beta$ for effecting the desired phase quadrature output. Angle $\beta$ is such as to produce a one half stripe shift between the arrays in the areas of the fibres. If $f$ is the fibre diameter, then:

$$\beta=d/2f \qquad (4)$$

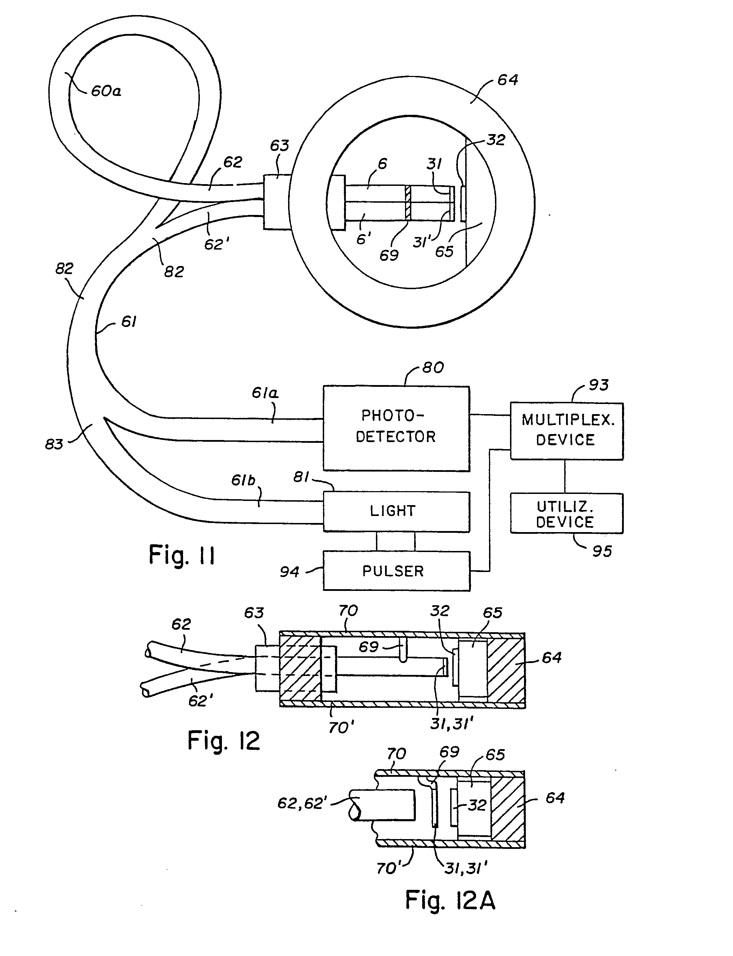

Suppose such a phase quadrature sensor, as will be further described in connection with Figures 11 and 12, is excited by an acoustic wave at link rod 9 that causes a displacement y of the fibre guide end:

$$y=a \cos (\omega t) \qquad (5)$$

where a <<S, and that a static displacement Y is caused by the steady pressure head of the associated medium. Then the outputs of the two channels of the sensor combination are:

$$I_1 \sim 1+\cos[(\pi/S) (Y+a \cos (\omega t))] \qquad (6)$$

$$I_2 \sim 1+\sin[(\pi/S) (Y+a \cos (\omega t))] \qquad (7)$$

For the normal condition, a <<S, so that Equations (6), (7) may be simplified:

$$I_1 \sim 1+\cos(\pi Y/S)-(\pi a/S) \sin (\pi Y/S) \cos \omega t \qquad (8)$$

$$I_2 \sim 1+\sin (\pi Y/S)-(\pi a/S) \cos (\pi Y/S) \cos \omega t \qquad (9)$$

In the latter equations, the terms $1+\cos$ ($\pi$ Y/S) and $1+\sin$ ($\pi$ Y/S) suffice to determine Y modulo 360°, being static or pressure head terms. Once Y is determined, the alternating or acoustic portion of the signals $I_1$ and $I_2$ may be divided by a sin ($\pi$ Y/S) and cos ($\pi$ Y/S) to get ($\pi$ a/S) unambiguously.

A more complete visualisation of the configuration shown in Figure 9 is afforded in Figures 11 and 12. In Figure 11, the opposed diaphragms 70, 70′ of Figure 12 having been removed, the side-by-side disposition of the fibre guides 6, 6′ is readily seen. The movable ends of the fibre guides 6, 6′ are provided with the common grating 31, 31′ and are moved in common by link rod 69 and flexible diaphragm 70. The alternative disposition of gratings shown in Figure 4 may be used. The fibre guides 6, 6′, both pass in sealed relation through a ferrule 63 mounted in casing 64. The extension 62 of the fibre optic guide 6 includes a delay section 60a before it joins at Y-coupler 82 the extension 62′ of the fibre optic guide 6′ to form a single guide 61 conveying data to a suitable multiplexer and data processing and utilisation system. While transmission of light through an absorptive grating affixed to the insert 65 of casing 64 may be employed, it is preferred in this embodiment to use a reflection grating array at 32 affixed to the flat surface of the insert 65. In this manner, light input and output signals pass in and out only through one side of the casing 64. The combined return signal found within the guide 61 and then guide 61a is first detected by photodetector 80, whose output is then processed as follows before application to a utilisation device 95 such as an oscillograph plotting signal amplitude versus time, for example. For optical excitation of the device, a light source 81 is coupled by guide 61b by a Y-junction 83 to the common guide 61.

In more detail, the device of Figures 11 and 12 functions as follows. The light source 81 emits pulses of duration $\pi$ followed by periods T during which no light is produced, being under the control of an appropriate pulser 94. These light pulses are injected into the common fibre guide 61 by the Y-coupler 83 and are sent via the fibre guide 61 into the sensor. The train of input light pulses is split equally by Y-coupler 82 so that half of the light is modulated by the grating pair 31', 32 and half is later modulated by the grating pair 31, 32. Input pulses to be reflected at the gratings 31, 32 arrive back at the Y-coupler 83 later than the pulses reflected at the gratings 31', 32 by a time delay $t=2sn_L/C$. Here $s$ is the effective length of delay loop 60a, $n_L$ is the index of refraction of the glass of the loop 60a, and $c$ is the velocity of light therewithin. If the time delay $t>\tau$, two fully resolved pulses are propagated back towards the photodetector 80, one pulse whose intensity is proportional to Equation (6) and one pulse whose intensity is proportional to Equation (7). These two pulses, after being received through the Y-junction 83 by the photodetector 80 may be time-division multplexed, as aforementioned, by a conventional multiplexer under control of the synchronising pulser 94 and photodetector 80, providing a plurality of outputs supplied by a plurality of leads coupled to the conventional utilisation apparatus 95 for processing in the conventional manner.

As is also the case in other embodiments in this disclosure, it will be understood that in Figure 12A the two or more fibre optical guides 62, 62' may be held stationary by ferrule 63 within the casing and that the gratings 31, 31' may be moved with respect to the fixed slanted grating 32. The link rod 69 is now provided to move grating or gratings 31, 31' vertically in response to pressure or other changes coupled through the diaphragm 70 and linking rod 69, for example.

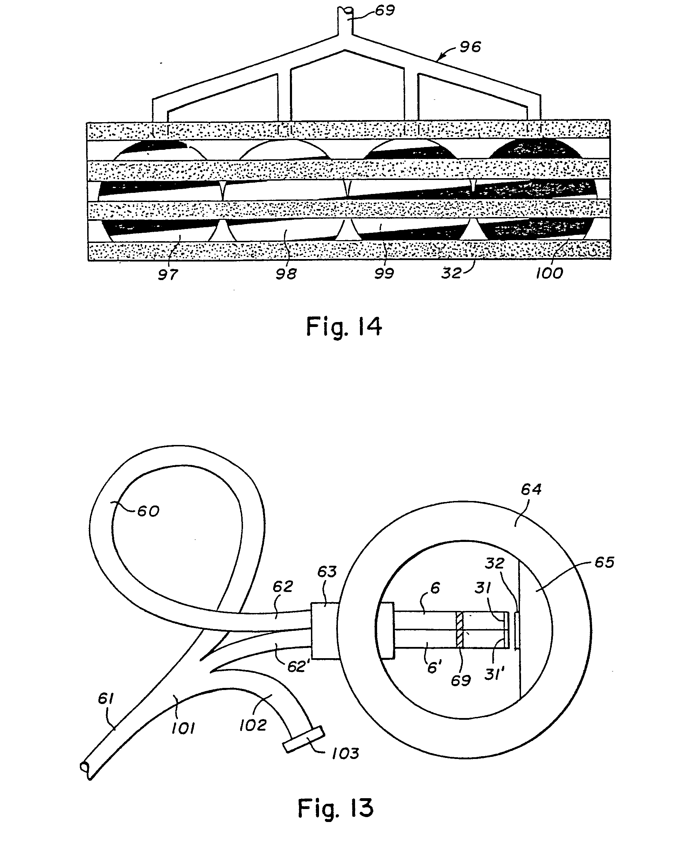

In the alternative form of Figure 11 shown in Figure 13, similar structures are disclosed with the exception that a branching fibre 102 coupled by the triple junction or splitter 101 to guide 61 is provided. At its end, a reflecting mirror 103 is located. Pulses of light thus reflected back into the fibre guide 61 may be detected by the photo-detector 80 of Figure 11 and used as reference pulses in the operation of a conventional keyed multiplexer 93. Self-synchronising multiplexer apparatus may alternatively be used. The three-way splitter 101 provides the further branching fibre 102 for the guide 61. The fibre guide 102 provides a reflected reference level signal for the photodetector 80 in view of the reflecting mirror 103. The reflected reference signal may be used in dividing out and thus eliminating from consideration non-acoustically produced light signal variations; i.e. multiplicative factors not explicitly contained in Equations (6) and (7).

It will also be understood that other multi-terminal multiplexer apparatus may be employed with the present sensors.

In the apparatus of Figures 9 to 13, any event causing variation in the detector output or the light source 81, varying optical losses, changes in circuit gain, and the like contributes fractional uncertainties in the static terms of Equations (8) and (9). Where static terms must be measured precisely, it is preferable to avoid such problems by using differential measurement techniques. For example, the device of Figure 14 employs four fibre light guides 97 to 100 in a configuration generally similar to that of Figure 9 and where ends of the light guides are simultaneously moved by a mechanical link rod 69 via its branching extensions 96. Although not specifically shown, each of the four guide extensions differs in length so as to create unique time delays between the light source pulses and the four pulses received from each modulating guide of the device as shown generally in Figure 14. Also, the grating common to the free ends of the light guides 97 to 100 is again tilted by the aforementioned angle $\beta$ with respect to the fixed grating 32, which may be a reflection grating. A single photodetector and multiplexer device may be employed and a single light source in a system generally similar to that of Figure 11, except that now four distinct delays are required.

It is again assumed in Figure 14 that the free ends of the light guides or the gratings themselves undergo a static displacement Y and an acoustic wave displacement $y=a \cos \omega t$. The stripe-to-stripe width (Figure 3) of the grating is taken to be S and the gratings 31, 32 are sufficiently separated that a sine-like response is achieved as a function of grating displacement y. For the four-fibre hydrophone of Figure 14, the signal levels returned to the photodetector 80 are:

$$I_1=E(1+\sin(\pi \ (y+Y/D)) \qquad (10)$$

$$I_2=E(1-\sin \ (\pi \ (y+Y)/D)) \qquad (11)$$

$$I_3=E(1+\cos \ (\pi \ (y+Y)/D)) \qquad (12)$$

$$I_4=E(1-\cos \ (\pi \ (y+Y)/D)) \qquad (13)$$

Combining Equations (10) and (11) and the combining Equations (12) and (13) yields the identities:

$$A\equiv(I_1-I_2)/(I_1+I_2)=\sin \ (\pi \ (y+Y)/D) \qquad (14)$$

$$B\equiv(I_3-I_4)/(I_3+I_4)=\cos \ (\pi \ (y+Y)/D) \qquad (15)$$

Set:

$$\sin \pi \ Y/D\equiv F \qquad (16)$$

$$\cos \pi \ Y/D\equiv C \qquad (17)$$

Also, assuming Y/D<<1 and small angles, well known trigonometric identifies yield:

$$A \equiv F + \pi \ yC/D \qquad (18)$$

$$B \equiv C - \pi \ yF/D \qquad (19)$$

Multiply Equation (18) by the factor C and Equation (19) by the factor F. Subtracting one from the other results in

$$\frac{\pi \ y}{D}(C^2 + F^2) = AC - BF \qquad (20)$$

Use of Equations (16) and (17) with trigonometric identities shows that the factor $(C^2 + F^2)$ of Equation (20) is equal to unity. Because y in Equations (7) and (8) is a signal at an acoustic frequency; i.e. 100 Hz to 2 KHz, the value F represents the value of A when passed through a low pass filter, while the value C represents the value of B when passed through a low pass filter.

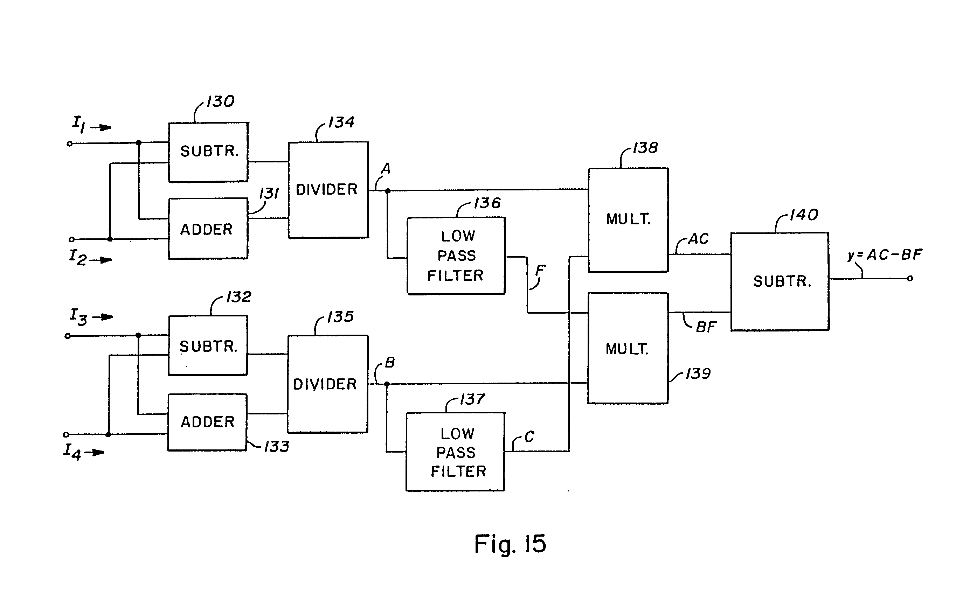

Accordingly, the desired acoustic output signal is derived, for example, using the apparatus of Figure 15. It is assumed that the signals $I_1$, $I_2$, $I_3$, and $I_4$ are derived as individual signals by multiplexing or by the use of four discrete photodetectors in cooperation with the quadruple grating and fibre systems of Figure 14. The signals $I_1$ to $I_4$ may be processed using analog or digital elements, as desired.

In the system of Figure 15, Equation (20) is solved first by subtracting the value $I_2$ from the value $I_1$ in a conventional subtracter circuit 130. Likewise, the sum $I_1 + I_2$ is obtained from a conventional adder circuit 131. The difference value from the circuit 130 is divided by the sum value from the circuit 131 in the conventional divider circuit 134 to produce signal A. Next, the value $I_4$ is subtracted from the value $I_3$ in a subtracter circuit 132 similar to the subtracter circuit 130 and $I_3$ and $I_4$ are added in an adder circuit 133 similar to the adder circuit 131. The difference value from the circuit 132 is divided by the sum value from the circuit 133 in a divider circuit 135 similar to the divider circuit 134 to produce signal B. A pair of similar conventional multipliers 138, 139 is provided. A direct input to the multiplier 138 is the value A, while the other is the filtered, low frequency value C obtained by passing value B through low pass filter 137. A direct input to the multiplier 139 is the value B, while the other is the filtered, low frequency value F obtained by passing the value A through low pass filter 136. The respective outputs AC and BF of multipliers 138, 139 are subtracted in a conventional subtraction device 140 to yield the desired output

$$\frac{\pi \ y}{D} = AC - BF.$$

While it is convenient to use four fibre guides as in Figure 14, it should be understood that only three simultaneously driven optical fibres are needed to define the desired output signals.

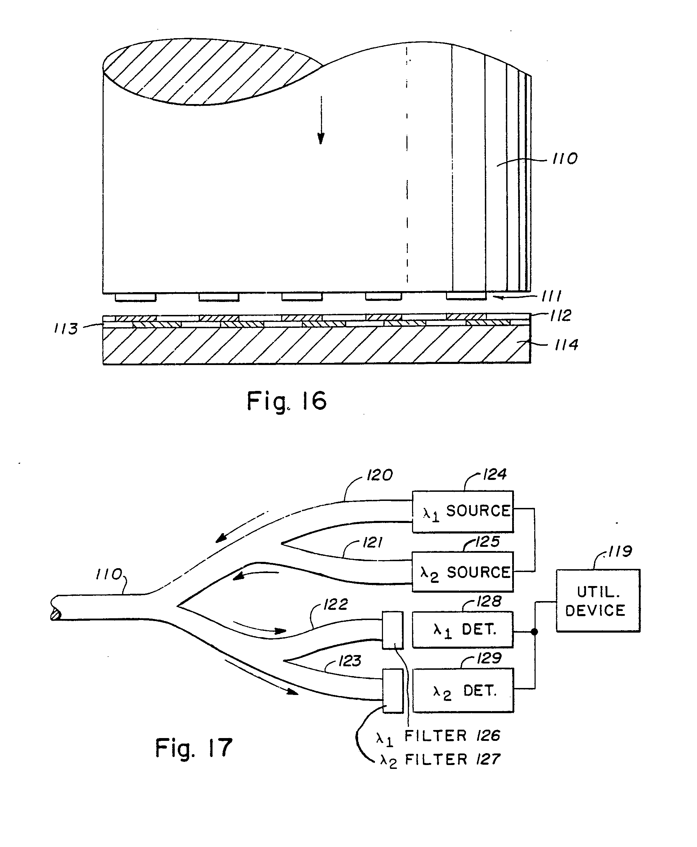

A further embodiment of the disclosure employing the phase quadrature effect uses a single fibre guide 110 as illustrated in Figure 16 with wave length multiplexing; i.e., two light sources emitting different wave lengths. The fibre guide 110 is supplied at its free end with a regular grating array 111 of stripes which are light absorbing. The equal-width intervening stripes are light transmitting. Spaced apart and normally parallel to the grating array 111 is a composite grating mounted on a mirror substrate 114. Affixed to the face of the mirror substrate 114 is a first regular array 113 formed of stripes of a first absorbing material with intervening transparent stripes. Affixed to the face of the array 113 is a second regular array 112 formed of stripes of a second absorbing material with intervening reflector stripes. The array 112 is displaced by the distance d/2 with respect to the array 113. The array 112 absorbs at wave length $\lambda_1$, while the array 113 absorbs at a separated $\lambda_2$. The narrow band absorbing filter array 112 lies in a regular manner just opposite the pattern of stripes on the guide 110 when the latter is at rest. As in the previously discussed embodiments, it may be preferred that the fibre guide 110 is rigidly fixed with respect to the instrument casing, and that one or the other or both of the grating systems be translated according to the parameter to be measured. The substrate 114 may be translated, thus translating the grating arrays 112, 113. The grating array 111 may be mounted on a transparent substrate and thus made movable independent of the fibre guide 110.

The two mutually spatially offset colour filter arrays 112, 113 are deposited in a phase quadrature relationship on the backing mirror substrate 114. Also, one colour ($\lambda_1$) produces the desired $1 + \cos(\pi Y/d)$ signal and the other colour ($\lambda_2$) produces the $1 + \sin(\pi y/d)$ signal, as shown in Figure 17. In more detail, it is seen in Figure 17 that light sources 124, 125 operate at distinct optical wave lengths $\lambda_1$ and $\lambda_2$ and respectively feed light through guides 120, 121 and through Y-couplers into the guide 110 itself. Signals modified by the interaction of grating arrays 111, 112, 113 return through the fibre guide 110 and successive Y-couplers to optical fibre guides 122, 123 capped respectively by $\lambda_1$ and $\lambda_2$ narrow pass band filters 126, 127 so that only $\lambda_1$ energy is injected into $\lambda_1$ photodetector 128 and only $\lambda_2$ energy is injected into $\lambda_2$ photodetector 129. The detected signals may be manipulated in the conventional manner in utilisation equipment 119.

Accordingly, it is seen that the invention may be used to provide opto-electronic transducer means for converting small displacement, pressure changes, or the like into optical intensity or phase variations and then, if desired, into varying electric currents. The required tolerance of alignment of the cooperating fibres is readily reduced by a factor of one hundred, thus greatly decreasing manufacturing cost. In a typical design, sensitivity is increased by 30 dB. A sensor constructed according to the present invention may demonstrate an acoustic sensitivity greater than is available in the prior art single-mode fibre device and, at the same time, may retain other beneficial features inherent in propagation in large area, large numerical aperture, multimode optical fibre wave guides. The multimode fibres used also permit use of low cost electroluminescent light sources and readily available connector technology.

Other aspects of the described embodiments are disclosed and claimed in co-pending European Patent Application No 83.201302.3 (published as EP—A—102677) which is divided from the present application.

**Claims**

1. Optical transducer means comprising mounting means having at least first casing means including pressure sensing means having a first time constant first optical wave guide means having a first longitudinal axis and a first end face, second optical wave guide means having a second longitudinal axis and a second end face, the first and second end faces lying in substantially parallel relation and forming a gap therebetween, first and second regular grating array means interposed in substantially parallel spaced relation within the gap substantially perpendicular to the first and second longitudinal axes, and suspension means adapted to permit relative displacement between the first and second regular grating array means in response to deflections of the pressure sensing means for modulation of light passing through the first and second regular grating array means, characterised in that the first casing means contains an inert damping fluid, the first and second optical wave guide means (6, 10) are coupled to the pressure sensing means (2, 20), and in that the first and second regular grating array means (31, 32) are disposed on the respective end faces (6A, 10A) of the first and second optical wave guide array means (6, 10).

2. Optical transducer means, according to claim 1, characterised in that the pressure sensing means comprises two diaphragams (2, 20) to which the first and second optical wave guides (6, 10) are respectively coupled.

3. Optical transducer means according to claim 1 or 2, characterised in that the first and second longitudinal axes are mutually off-set causing the first and second regular grating array means (31, 32) to be disposed in mutually off-set relation in the unexcited state of the transducer means.

4. Optical transducer means according to any of claims 1 to 2, characterised in that at least the first optical wave guide means (6) comprises multimode optical fibre wave guiding means of the graded refractive index kind.

5. Optical transducer means according to any of the preceding claims, characterised in that the first and second regular grating array means (31, 32) are each formed by alternate transparent and opaque stripes of substantially equal widths.

6. Optical transducer means according to claim 5, characterised in that corresponding opposed ones of the opaque stripes overlap when viewed along the first and second axes in the unexcited state of the transducer means by one half the width of each opaque stripe.

7. Optical transducer means according to any of claims 1 to 4, characterised in that the first regular grating array means is formed by a first repetitive pattern of parallel grooves (40, 44) disposed in the first end face of the first optical wave guide means (6).

8. Optical transducer means according to claim 7, characterised in that the second regular grating array means is formed by a second repetitive pattern of parallel grooves (41, 45) disposed in the second face of the second optical wave guide means (10).

9. Optical transducer means according to claim 8, characterised in that the first and second repetitive patterns are disposed in mutually parallel relation.

10. Optical transducer means according to claim 9, characterised in that the opposed ones of the parallel grooves overlap when viewed along the first and second axes in the unexcited state of the transducer means by one half the width of the parallel grooves.

11. Optical transducer means according to any of claims 7 to 10, characterised in that each of the parallel grooves (40, 41) has a sinusoidal cross-section.

12. Optical transducer means according to any of claims 7 to 10 characterised in that each of the parallel grooves (44, 45) has a generally triangular cross-section.

13. Optical transducer means according to any of the preceding claims, characterised in that the mounting means further includes second casing means (56) having second pressure sensing diaphragm means (52) which has a second time constant greater than the first time constant of the pressure sensing diaphragm means (2, 20).

14. Optical tranducer means according to claim 14, characterised in that the first and second casing means are coupled by at least one restricted bore (57, 58) and in that an inert damping fluid is contained within both the first and second casing means.

15. Optical transducer means according to any of the preceding claims, characterised in that the suspension means is coupled to at least one of the first or second regular grating array means for displacement thereof.

16. Optical transducer means according to claim 15, characterised by further including collimating lens means (36, 37) with a first face thereof affixed at the first end face (6A) of the first optical wave guide means (6) and a second face there of affixed to the first regular grating means (31).

17. Optical transducer means according to claim 15, characterised by further including collimating means (36, 37) with first and second faces, the first face affixed at the end face of the first optical wave guide means (6), and the first regular grating means (31) being spaced from the second face of the collimating lens means and being suspended only by the suspension means.

**Patentansprüche**

1. Optischer Wandler mit Befestigungseinrichtungen, die zumindestens erste Gehäuseteile aufweisen, die Druckmeßeinrichtungen mit einer ersten Zeitkonstante einschließen, mit ersten optischen Wellenleitereinrichtungen, die eine erste Längsachse une eine erste Endfläche aufweisen, mit zweiten optischen Wellenleitereinrichtungen, die eine zweite Längsachse une eine zweite Endfläche aufweisen, wobei die ersten und zweiten Endflächen im wesentlichen parallel zueinander angeordnet sind und zwischen sich einen Spalt bilden, mit ersten und zweiten regelmäßigen Gitteranordnungseinrichtungen, die im wesentlichen parallel zueinander und mit Abstand voneinander in dem Spalt im wesentlichen senkrecht zu den ersten und zweiten Längsachsen angeordnet sind, und mit Halterungseinrichtungen, die eine Relativbewegung zwischen den ersten und zweiten regelmäßigen Gitteranordnungseinrichtungen in Abhängigkeit von Auslenkungen der Druckmeßeinrichtungen ermöglichen, um Licht zu modulieren, das durch die ersten und zweiten regelmäßigen Gitteranordnungseinrichtungen läuft, dadurch gekennzeichnet, daß die ersten Gehäuseteile ein inertes Dämpfungsströmumgsmedium enthalten, daß die ersten und zweiten optischen Wellenleitereinrichtungen (6, 10) mit den Druckmeßeinrichtungen (2, 20) gekoppelt sind und daß die ersten und zweiten regelmäßigen Gitteranordnungseinrichtungen (31, 32) auf den jeweiligen Endflächen (6A, 10A) der ersten und zweiten optischen Wellenleiteranordnungseinrichtungen (6, 10) angeordnet sind.

2. Optischer Wandler nach Anspruch 1, dadurch gekennzeichnet, daß die Druckmeßeinrichtungen durch zwei Membranen (2, 20) gebildet sind, mit denen die ersten und zweiten optischen Wellenleiter (6, 10) jeweils gekoppelt sind.

3. Optischer Wandler nach Anspruch 1 oder 2, dadurch gekennzeichnet, daß die ersten und zweiten Längsachsen gegeneinander versetzt sind, so daß die ersten und zweiten regelmäßigen Gitteranordnungseinrichtungen (31, 32) im nichterregten Zustand der Wandlereinrichtungen in gegeneinander versetzter Beziehung angeordnet sind.

4. Optischer Wandler nach einem der Ansprüche 1 bis 3, dadurch gekennzeichnet, daß zumindestens die ersten optischen Wellenleitereinrichtungen (6) eine optische Mehrmoden-Faser-Wellenleitereinrichtung mit abgestuftem Brechungsindex umfassen.

5. Optischer Wandler nach einem der vorhergehenden Ansprüche, dadurch gekennzeichnet, daß die ersten und zweiten regelmäßigen Gitteranordnungseinrichtungen (31, 32) jeweils durch abwechselnde lichtdurchlässige und lichtundurchlässige Streifen von im wesentlichen gleicher Breite gebildet sind.

6. Optischer Wandler nach Anspruch 5, dadurch gekennzeichnet, daß entsprechende gegenüberliegende lichtdurchlässige Streifen bei Betrachtung entlang der ersten und zweiten Achsen im nichterregten Zustand des Wandlers einander um eine Hälfte der Breite jedes lichtundurchlässigen Streifens überlappen.

7. Optischer Wandler nach einem der Ansprüche 1 bis 4 dadurch gekennzeichnet, daß die erste regelmäßige Gitteranordnungseinrichtung durch ein erstes sich wiederholendes Muster von parallelen Nuten (40, 44) gebildet ist, die in der ersten Endfläche der ersten optischen Wellenleitereinrichtung (6) angeordnet sind.

8. Optischer Wandler nach Anspruch 7, dadurch gekennzeichnet, daß die zweite regelmäßige Gitteranordnungseinrichtung durch ein zweites sich wiederholendes Muster von parallelen Nuten (41, 45) gebildet ist, die in der zweiten Stirnfläche der zweiten optischen Wellenleitereinrichtung (10) angeordnet sind.

9. Optischer Wandler nach Anspruch 8, dadurch gekennzeichnet, daß die ersten und zweiten sich wiederholenden Muster in zueinander paralleler Beziehung angeordnet sind.

10. Optischer Wandler nach Anspruch 9, dadurch gekennzeichnet, daß sich die gegenüberliegenden der parallelen Nuten überlappen bei Betrachtung entlang der ersten und zweiten Achsen im nichterregten Zustand der Wandlereinrichtung um eine Hälfte der Breite jeder der parallelen Nuten überlappen.

11. Optischer Wandler nach einem der Ansprüche 7 bis 10, dadurch gekennzeichnet, daß jede der parallelen Nuten (40, 41) eine sinusförmige Querschnittsform aufweist.

12. Optischer Wandler nach einem der Ansprüche 7 bis 10 dadurch gekennzeichnet, daß jede der parallelen Nuten (44, 45) einen allgemein dreieckigen Querschnitt aufweist.

13. Optischer Wandler nach einem der vorhergehenden Ansprüche, dadurch gekennzeichnet, daß die Befestigungseinrichtungen weiterhin ein zweites Gehäuseteil (56) einschließen, das zweite Druckmeßmembranenteile (52) aufweist, die eine zweite Zeitkonstante aufweisen, die größer als die Zeitkonstante der ersten Druckmeßmembranteile (2, 20) ist.

14. Optischer Wandler nach Anspruch 14, dadurch gekennzeichnet, daß die ersten und zweiten Gehäuseteile miteinander durch zumindestens eine eingeschnürte Bohrung (57, 58) verbunden sind und daß ein inertes Dämpfungsströmungsmedium in sowohl den ersten als auch den zweiten Gehäuseteilen enthalten ist.

15. Optischer Wandler nach einem der vorhergehenden Ansprüche, dadurch gekennzeichnet, daß die Halterungseinrichtungen mit zumindestens einer der ersten oder zweiten regelmäßigen Gitteranordnungseinrichtungen verbunden sind, um diese zu bewegen.

16. Optischer Wandler nach Anspruch 15, dadurch gekennzeichnet, daß er weiterhin Kollimationslinseneinrichtungen (36, 37) aufweist, von denen eine erste Stirnfläche an der ersten Endfläche (6A) der ersten optischen Wellenleitereinrichtungen (6) befestigt ist, während eine zweite Fläche an den ersten regelmäßigen Gittereinrichtungen (31) befestigt ist.

17. Optischer Wandler nach Anspruch 15, gekennzeichnet durch den Einschluß von Kollimationseinrichtungen (36, 37) mit ersten und zweiten Endflächen, von denen die erste Endfläche an der Endfläche der ersten optischen Wellenleitereinrichtung (6) befestigt ist, wobei die ersten regelmäßigen Gittereinrichtungen (31) mit Abstand von der zweiten Fläche der Kollimationslinseneinrichtungen angeordnet und lediglich von den Halterungseinrichtungen gehalten sind.

**Revendications**

1. Transducteur optique comprenant des éléments de montage incluant au moins une première enveloppe qui comporte un dispositif sensible à la pression ayant une première constante de temps, un premier guide d'ondes optiques présentant un premier axe longitudinal et une première face d'extrémité, un second guide d'ondes optiques présentant un second axe longitudinal et une seconde face d'extrémité, ces première et seconde faces d'extrémité étant sensiblement parallèles et ménageant entre elles un interstice, des premier et second réseaux à disposition régulière montés dans cet interstice en étant sensiblement parallèles entre eux et en étant essentiellement perpendiculaires aux premier et second axes longitudinaux, et des organes de soutien agencés de façon à permettre un déplacement relatif entre ces premier et second réseaux sous l'effet des déformations du dispositif sensible à la pression, de façon à moduler la lumière qui traverse lesdits premier et second réseaux, transducteur caractérisé en ce que la première enveloppe contient un fluide amortisseur inerte, les premier et second guides (6, 10) d'ondes optique sont reliés au dispositif (2, 20) sensible à la pression et en ce que les premier et second réseaux (31, 32) à disposition régulière sont disposés sur les faces d'extrémité respectives (6A, 10A) des premier et second guides (6, 10) d'ondes optiques.

2. Transducteur optique selon la revendication 1, caractérisé en ce que le dispositif sensible à la pression comprend deux diaphragmes (2, 20) auxquels le premier et le second guide (6, 10) d'ondes sont respectivement reliés.

3. Transducteur optique selon la revendication 1 ou 2, caractérisé en ce que les premier et second axes longitudinaux sont mutuellement décalés, ce qui fait que les premier et second réseaux (31, 32) sont mutuellement décalés quand le transducteur est à l'état de non excitation.

4. Transducteur optique selon l'une quelconque des revendications 1 à 3, caractérisé en ce qu'au moins le premier guide (6) d'ondes optiques comprend un dispositif guide-ondes à fibre optique multimodes du genre à indice de réfraction progressif.

5. Transducteur optique selon l'une quelconque des revendications précédentes, caractérisé en ce que chacun des premier et second réseaux (31, 32) à disposition régulière est formé de bandes alternativement transparentes et opaques ayant sensiblement la même largeur.

6. Transducteur optique selon la revendication 5, caractérisé en ce que, lorsque le transducteur n'est pas excité, les bandes opaques opposées correspondantes, vues dans le sens des premier et second axes longitudinaux, se recouvrent sur la moitié de leur largeur.

7. Transducteur optique selon l'une quelconque des revendications 1 à 4, caractérisé en ce que le premier réseau à disposition régulière est formé par une première série répétitive de gorges parallèles (40, 44), formées dans la première face d'extrémité du premier guide (6) d'ondes optiques.

8. Transducteur optique selon la revendication 7, caractérisé en ce que le second réseau à disposition régulière est formé par une seconde série répétitive de gorges parallèles (41, 45) formées dans la seconde face d'extrémité du second guide (10) d'ondes optiques.

9. Transducteur optique selon la revendication 8, caractérisé en ce que les première et seconde séries répétitives sont mutuellement parallèles.

10. Transducteur optique selon la revendication 9, caractérisé en ce que les gorges parallèles qui sont opposées, vues dand le sens des premier et second axes longitudinaux, se superposent sur la moitié de leur largeur lorsque le transducteur n'est pas excité.

11. Transducteur optique selon l'une quelconque des revendications 7 à 10, caractérisé en ce que chacune des gorges parallèles (40, 41) a une section droite sinusoïdale.

12. Transducteur optique selon l'une quelconque des revendications 7 à 10, caractérisé en ce que chacune des gorges parallèles (44, 45) a une section droite de forme générale triangulaire.

13. Transducteur optique selon l'une quelconque des revendications précédentes, caractérisé en ce que le support de montage comporte encore une seconde enveloppe (56), comportant un second diaphragme (52) sensible à la pression, ayant une seconde constante de temps qui est plus grande que la première constante de temps des diaphragmes (2, 20) sensibles à la pression.

14. Transducteur optique selon la revendication 13, caractérisé en ce que la première et seconde enveloppe sont reliées par au moins un trou étroit (57, 58) et en ce qu'elles contiennent toutes deux un fluide amortisseur inerte.

15. Transducteur optique selon l'une quelconque des revendications précédentes, caractérisé en ce que les organes de soutient sont reliés à au moins l'un des premier et second réseaux à disposition régulière, de façon à les déplacer.

16. Transducteur optique selon la revendication 15, caractérisé en ce qu'il comporte encore des lentilles collimatrices (36, 37) dont une première face est fixée à la première face d'extrémité (6A) du premier guide d'ondes optiques et dont la seconde face est fixée au premier-réseau (31) à disposition régulière.

17. Transducteur optique selon la revendication 15, caractérisé en ce qu'il comporte des lentilles collimatrices (36, 37) présentant des première et seconde facés, cette première face étant fixée à la face d'extémité du premier guide (6) d'ondes optiques et le premier réseau (31) étant espacé de cette second face de la lentille et étant soutenu uniquement par l'organe de soutien.

Fig. I

Fig. 2

Fig. 3

30    22    33

S

10

6    40    41

Fig. 4

30    22    33

S    f

6    10

44    45

Fig. 5

51    53    I

52    57

59    4'

5'

6

14

56    58

19

Fig. 8

2

Fig. 6

Fig. 7

Fig. 7A

Fig. 9

Fig. 10

Fig. 11

Fig. 12

Fig. 12A

PHOTO-DETECTOR

MULTIPLEX. DEVICE

LIGHT

UTILIZ. DEVICE

PULSER

Fig. 14

Fig. 13

Fig. 15

Fig. 16

Fig. 17